# EUROPEAN PATENT SPECIFICATION

(11) **EP 2 415 905 B1**
(45) Date of publication and mention of the grant of the patent: **13.11.2013**
(21) Application number: 11176431.2
(22) Date of filing: 03.08.2011
(51) Int. Cl.: C23C 28/00, C04B 41/00

(54) **CMAS resistant TBC coating**
CMAS-beständige TBC-Beschichtung
Revêtement TBC résistant au CMAS

(30) Priority: 05.08.2010 US 850877
(43) Date of publication of application: 08.02.2012
(73) Proprietor: United Technologies Corporation, Hartford, CT 06101 (US)
(72) Inventor: Hongoh, Masamichi, Manchester, CT 06040 (US)
(74) Representative: Hall, Matthew Benjamin

(56) References cited:
- EP-A2- 2 202 212
- WO-A1-2011/078972
- US-A- 5 660 885

## Description

### BACKGROUND

The present disclosure is directed to a coating system for a turbine engine component which has an activated CMAS resistant reactive layer deposited over a thermal barrier coating and a method of forming same.

The durability and the maximum temperature capability of a thermal barrier coating (TBC) system used in gas turbine engines is often limited by deposits of calcium-alumino-silicate (CMAS). These deposits melt and wet the material, typically yttria-stabilized zirconia, used as the thermal barrier coating, causing it to be drawn by capillarity into all of the open void space. Upon cooling, when the CMAS solidifies, the penetrated layer develops a high modulus. Since the thermal barrier coatings rely on spatially configured voids to achieve strain tolerance with the superalloy substrate, those regions penetrated by the CMAS can be detrimental, causing the thermal barrier coating to be susceptible to extensive spallation when subjected to subsequent thermal cycles. Thermal barrier coating spallation can lead to a drastic reduction in the turbine engine component durability and to a direct attack on the underlying substrate.

A common approach to deal with this problem is to deposit an extra layer over the thermal barrier coating. However, this extra layer is not activated prior to the introduction of the component into service. As a result, it does not become activated until CMAS is encountered in service. CMAS comes with a variety of chemical compositions depending upon its geographical origin. Consequently, the effectiveness of this extra layer however is unknown and can be less than desirable.

Known CMAS coatings are described in WO-A-2011/078972, US-A-5660885 and EP-A-2202212.

### SUMMARY

In this disclosure, the CMAS risk is mitigated and the durability of a thermal barrier coating can be increased by creating an activated reactive layer with known CMAS reaction kinetics on thermal barrier coating, prior to service.

In accordance with the instant disclosure, there is described a process for forming a coating system on a turbine engine component which comprises the steps of: providing a substrate; depositing a thermal barrier coating on the substrate; depositing a reactive layer with known CMAS reaction kinetics on the thermal barrier coating; said depositing step comprising forming a powder mixture containing SiO₂, CaO, MgO and Al₂O₃ and at least one reactive element selected from the group consisting of Gd₂Zr₂O₇ and TiO₂ and spraying said powder mixture and said reactive element over said thermal barrier coating; and activating the reactive layer prior to the component being placed in service, wherein said activating step comprises subjecting said reactive layer to a heat treatment at a temperature in the range of 1149°C to 1204°C (2100°F to 2200°F).

Further, in accordance with the present disclosure, there is provided a turbine engine component comprising: a substrate; a thermal barrier coating deposited on the substrate; a reactive layer deposited on the thermal barrier coating; said reactive layer being formed from a powder mixture containing SiO₂, CaO, MgO and Al₂O₃ and at least one reactive element selected from the group consisting of Gd₂Zr₂O₇ and TiO₂; and said reactive layer having known CMAS reaction kinetics and being activated prior to the turbine engine component entering into service.

Other details of the process and the turbine engine component are set forth in the following detailed description and the accompanying drawings, wherein like reference numerals depict like elements.

### BRIEF DESCRIPTION OF THE DRAWINGS

Figures 1 and 2 are schematic representations of a turbine engine component having a coating system with an outer CMAS reactive layer; and
Figures 3 and 4 are schematic representations of a turbine engine component having an alternative coating system with an outer CMAS reactive layer.

### DETAILED DESCRIPTION OF THE PREFERRED EMBODIMENT(S)

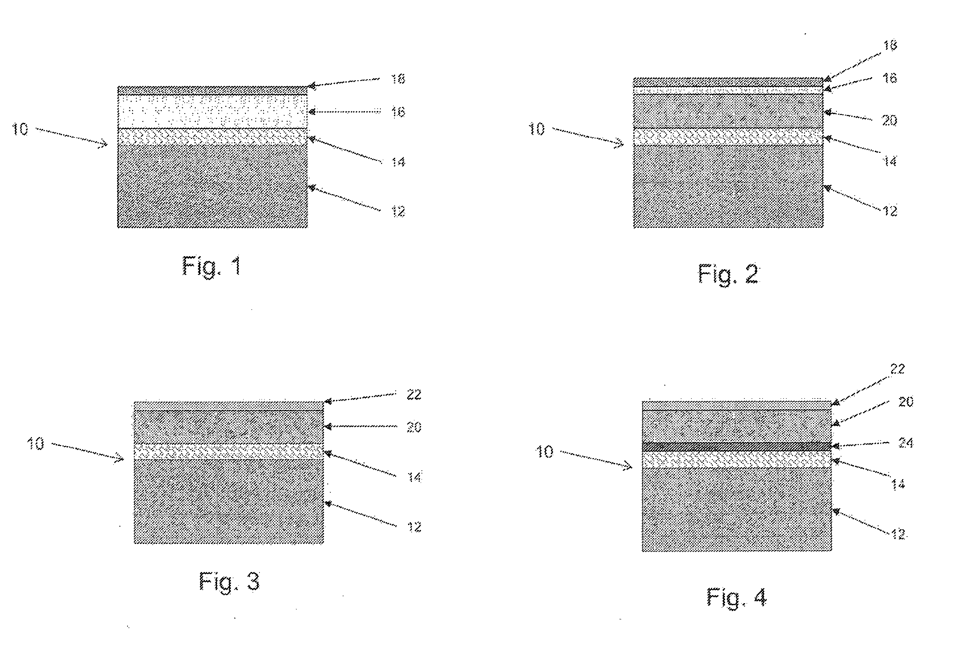

Referring now to Figures 1 and 2, there is shown a turbine engine component 10, such as a combustor panel or a turbine blade. The component 10 has a substrate 12 which may be formed from any suitable material known in the art, such as a ceramic composite material, a nickel based superalloy, a cobalt based alloy, or a titanium based alloy.

If desired, an optional bond coat 14 may be deposited on a surface of the substrate 12. The bond coat 14 may be deposited using any suitable technique known in the art and may comprise a material selected from the group consisting of aluminides, platinum alumindes, and MCrAlYs, where M is selected from the group consisting of nickel, cobalt, iron, and mixtures thereof.

Deposited on a surface of the bond coat 14, when the bond coat 14 is present, is a thermal barrier coating 16. If the bond coat 14 is not present, the thermal barrier coating 16 may be deposited directly on a surface of the substrate 12. The thermal barrier coating 16 may be formed from any suitable material known in the art. For example, the thermal barrier coating 16 can be a yttria stabilized zirconia deposited using an APS technique or EBPVD technique. The thermal barrier coating 16 may contain crystallization promoting elements, such as La₂Zr₂O₇, Gd₂Zr₂O₇, Al₂O₃, TiO₂, ZrO₂ and mixtures thereof. One suitable thermal barrier coating composition could be an APS deposited coating having a composition of (YSZ+A+B), where YSZ is yttria partially stabilized zirconia, and A and B are at least two of the crystallization promoting elements. Crystallization is a conversion of glass to fine-grained crystalline "glass-ceramics".

If desired, a layer 20 may be deposited between the bond coat 14 and the layer 16. The layer 20 may be a conventional thermal barrier coating with YSZ or any suitable thermal barrier coating system.

Thereafter, an exterior CMAS resistant layer 18 may be deposited on the thermal barrier coating 16. The layer 18 may be a thin film of up to approximately 50 µ m thick chemically conditioned CMAS material containing at least one reactive element, which is selected from the group consisting of Gd₂Zr₂O₇ and TiO₂.

To create the CMAS layer 18, a powder mixture is prepared, having a nominal composition in Table 1.

**Table 1**

| Nominal composition of the conditioned CMAS in mol.% | | | | | | |
|---|---|---|---|---|---|---|
| SiO₂ | CaO | MgO | Al₂O₃ | Na₂O | K₂O | Fe₂O₃ |
| 45 | 33 | 9 | 13 | | | |

The chemical composition provides a powder mixture, which after thermo-chemical reaction with the thermal barrier coating layer 16, has a melting temperature significantly higher, at least 10°C (50 degrees Fahrenheit) higher, than the melting temperature of the CMAS encountered in field engine applications.

The CMAS resistant layer 18 may be deposited using a solution-precursor plasma spray (SPPS) or a conventional APS procedure. The spray method of SPPS is identical to APS deposition with the substitution of a solution atomizer for the solid powder feeder. Plasma torch operating power and gas flow rates are in the same range as used for depositing APS coatings.

If desired, the top CMAS layer 18 may have graded characteristics from the interface with the thermal barrier coating 16 to the outer surface of the layer 18 for better adherence and strain compatibility.

After deposition, the deposited film of CMAS is subjected to a heat treatment at 1149°C to 1204°C (2100°F - 2200°F) for up to 24 hours to form an active reaction layer. In this way, the CMAS layer is activated before the layer comes into contact with CMAS during service.

A reactive layer 18 formed as set forth hereinabove has CMAS reaction kinetics. The heat treatment turns the CMAS layer into CMAS glass, which reacts with the layer 16 underneath with nucleating agent, transitions to form globular anorthide phase, or to form a cubic garnet type crystal structure, depending upon the nucleating agents that are used.

The actively formed reaction layer 18 over the thermal barrier coating 16 has a melting temperature, which is significantly higher than the common CMAS encountered in the field. Upon contact with the common CMAS in a high temperature environment, the common CMAS with lower melting temperature will not readily dissolve into the reaction layer. Even if it dissolves into the reaction layer at higher temperature, it will recrystalize quickly within the reaction layer, which prohibits further CMAS penetration into the thermal barrier coating layer. Protecting the thermal barrier coating from spallation can significantly increase the durability of the turbine engine component 10 and thus save maintenance costs. The process described herein is simple and should be effective in protecting the turbine engine component by reducing and/or eliminating CMAS attacks.

Referring now to Figures 3 and 4, there is shown an alternative coating system deposited on the substrate 12. The coating system may have an optional bond coat 14, a thermal barrier coating 20 and an outer engineered CMAS layer 22 with at least one recrystallization agent discussed hereinbefore. As shown in Figure 4, a layer 24 can be provided between the bond coat 14 and the thermal barrier coating 20. The layer 22 in each embodiment can be applied by APS or SPPS.

It is apparent that there has been provided in accordance with the instant disclosure a CMAS resistant TBC coating. While a specific embodiment of the coating has been described herein, other unforeseeable alternatives, variations, and modifications may become apparent to those skilled in the art having read the foregoing description. Accordingly, it is intended to embrace those alternatives, modifications, and variations which fall within the broad scope of the appended claims.

## Claims

1. A process for forming a coating system on a turbine engine component (10) which comprises the steps of:
providing a substrate (12);
depositing a thermal barrier coating (16;20) on the substrate;
depositing a reactive layer (18;22) with known CMAS reaction kinetics on the thermal barrier coating; said depositing step comprising forming a powder mixture containing SiO₂, CaO, MgO and Al₂O₃ and at least one reactive element selected from the group consisting of Gd₂Zr₂O₇ and TiO₂ and spraying said powder mixture and said reactive element over said thermal barrier coating (16; 20); and
activating the reactive layer prior to the component being placed in service,
wherein said activating step comprises subjecting said reactive layer (18;22) to a heat treatment at a temperature in the range of 1149°C to 1204°C (2100°F to 2200°F).

2. The process of claim 1, wherein said substrate providing step comprises providing a combustor panel.

3. The process of claim 1 or 2, wherein said thermal barrier coating depositing step comprises depositing a thermal barrier coating (16;20) formed from a yttria-stabilized zirconia.

4. The process of claim 3, wherein the thermal barrier coating has at least one crystallization promoting element selected from the group consisting of La₂Zr₂O₇, Gd₂Zr₂O₇, Al₂O₃, TiO₂, ZrO₂, and mixtures thereof.

5. The process of any preceding claim, further comprising depositing a bond coat (14) on a surface of said substrate (12) prior to depositing said thermal barrier coating (16;20).

6. The process of any preceding claim, further comprising preparing a powder mixture having a chemical composition having a melting temperature, which after thermo-chemical reaction with the thermal barrier coating (16;20), is higher than the melting temperature of the CMAS encountered in service and wherein said powder mixture preparing step comprises preparing a chemical composition wherein said melting temperature is at least 10°C (50 degrees Fahrenheit) higher than the melting temperature of the CMAS encountered in service.

7. A turbine engine component (10) comprising:
a substrate (12);
a thermal barrier coating (16;20) deposited on the substrate;
a reactive layer (18; 22) deposited on the thermal barrier coating;
said reactive layer (18; 22) being formed from a powder mixture containing SiO₂, CaO, MgO and Al₂O₃ and at least one reactive element selected from the group consisting of Gd₂Zr₂O₇ and TiO₂; and
said reactive layer having known CMAS reaction kinetics and being activated prior to the turbine engine component entering into service.

8. The turbine engine component (10) according to claim 7, wherein said component is a combustor panel.

9. The turbine engine component (10) of claim 7 or 8, further comprising a bond coat (14) between said substrate (12) and said thermal barrier coating (16;20).

10. The turbine engine component (10) of claim 7, 8 or 9, wherein said thermal barrier coating (16;20) is formed from a yttria stabilized zirconia.

11. The turbine engine component of claim 10, wherein the thermal barrier coating (16; 20) has at least one crystallization promoting element selected from the group consisting of La₂Zr₂O₇, Gd₂Zr₂O₇, Al₂O₃, TiO₂, ZrO₂, and mixtures thereof.

12. The turbine engine component (10) of any of claims 7 to 11, wherein said reactive layer (18;22) has a melt temperature which is higher than the melt temperature of the CMAS encountered during service, wherein said melt temperature of the reactive layer is at least 10°C (50 degrees Fahrenheit) higher than the melt temperature of the CMAS encountered during service.

13. The process of any of claims 1 to 6, wherein said reactive layer (18;22) has graded characteristics from an interface with said thermal barrier coating (16;20) to an external surface of said reactive layer.

14. The turbine engine component (10) of any of claims 7 to 12, wherein said reactive layer (18;22) has graded characteristics from an interface with said thermal barrier coating (16;20) to an external surface of said reactive layer.

## Patentansprüche

1. Verfahren zur Bildung eines Beschichtungssystems auf einer Turbinenmaschinenkomponente (10), das folgende Schritte aufweist:
Bereitstellen eines Substrats (12);
Abscheiden einer Wärmebarrierebeschichtung (16; 20) auf dem Substrat;
Abscheiden einer reaktiven Schicht (18; 22) mit bekannter CMAS-Reaktionskinetik auf der Wärmebarrierebeschichtung; wobei der Abscheidungsschritt ein Herstellen eines Pulvergemisches, das SiO₂, CaO, MgO und Al₂O₃ und mindestens einen reaktiven Bestandteil, der ausgewählt wird aus der Gruppe, die besteht aus Gd₂Zr₂O₇ und TiO₂, enthält, und ein Sprühen des Pulvergemisches und des reaktiven Bestandteils über die Wärmebarrierebeschichtung (16; 20) aufweist; und
Aktivieren der reaktiven Schicht bevor die Komponente in Betrieb genommen wird, wobei der Aktivierungsschritt ein Unterziehen der reaktiven Schicht (18; 22) einer Wärmebehandlung bei einer Temperatur in dem Bereich von 1149°C bis 1204°C (2100°F bis 2200°F) aufweist.

2. Verfahren nach Anspruch 1, bei dem der Schritt des Bereitstellens des Substrats ein Bereitstellen einer Brennerplatte aufweist.

3. Verfahren nach Anspruch 1 oder 2, bei dem der Schritt des Abscheidens der Wärmebarrierebeschichtung ein Abscheiden einer Wärmebarrierebeschichtung (16; 20), die aus einem Yttriumoxid-stabilisierten Zirkoniumdioxid ausgebildet ist, aufweist.

4. Verfahren nach Anspruch 3, bei dem die Wärmebarrierebeschichtung mindestens einen kristallisationsfördernden Bestandteil besitzt, der ausgewählt wird aus der Gruppe, die besteht aus La₂Zr₂O₇, Gd₂Zr₂O₇, Al₂O₃, TiO₂, ZrO₂, und Gemischen davon.

5. Verfahren nach einem vorangehenden Anspruch, außerdem aufweisend ein Abscheiden einer Bindungsschicht (14) auf einer Oberfläche des Substrats (12) vor dem Abscheiden der Wärmebarrierebeschichtung (16; 20).

6. Verfahren nach einem vorangehenden Anspruch, außerdem aufweisend ein Herstellen eines Pulvergemisches mit einer chemischen Zusammensetzung, die eine Schmelztemperatur hat, die nach thermochemischer Reaktion mit der Wärmebarrierebeschichtung (16; 20) höher ist als die Schmelztemperatur des CMAS, das im Betrieb anzutreffen ist, und wobei der Schritt des Herstellens des Pulvergemisches ein Herstellen einer chemischen Zusammensetzung aufweist, bei der die Schmelztemperatur mindestens 10°C (50 Grad Fahrenheit) höher ist als die Schmelztemperatur des CMAS, das im Betrieb anzutreffen ist.

7. Turbinenmaschinenkomponente (10) aufweisend:
ein Substrat (12);
eine Wärmebarrierebeschichtung (16; 20), die auf dem Substrat abgeschieden ist;
eine reaktive Schicht (18; 22), die auf der Wärmebarrierebeschichtung abgeschieden ist;
wobei die reaktive Schicht (18; 22) aus einem Pulvergemisch, das SiO₂, CaO, MgO und Al₂O₃ und mindestens einen reaktiven Bestandteil, der ausgewählt ist aus der Gruppe, die besteht aus Gd₂Zr₂O₇ und TiO₂, enthält, ausgebildet ist; und
wobei die reaktive Schicht eine bekannte CMAS-Reaktionskinetik hat, und aktiviert wird bevor die Turbinenmaschinenkomponente in Betrieb genommen wird.

8. Turbinenmaschinenkomponente (10) nach Anspruch 7, wobei die Komponente eine Brennerplatte ist.

9. Turbinenmaschinenkomponente (10) nach Anspruch 7 oder 8, außerdem aufweisend eine Bindungsschicht (14) zwischen dem Substrat (12) und der Wärmebarrierebeschichtung (16; 20).

10. Turbinenmaschinenkomponente (10) nach Anspruch 7, 8, oder 9, wobei die Wärmebarrierebeschichtung (16; 20) aus einem Yttriumoxid-stabilisierten Zirkoniumdioxid ausgebildet ist.

11. Turbinenmaschinenkomponente nach Anspruch 10, wobei die Wärmebarrierebeschichtung (16; 20) mindestens einen kristallisationsfördernden Bestandteil besitzt, der ausgewählt ist aus der Gruppe, die besteht aus La₂Zr₂O₇, Gd₂Zr₂O₇, Al₂O₃, TiO₂, ZrO₂, und Gemischen davon.

12. Turbinenmaschinenkomponente (10) nach einem der Ansprüche 7 bis 11, wobei die reaktive Schicht (18; 22) eine Schmelztemperatur hat, die höher ist als die Schmelztemperatur des CMAS, das im Betrieb anzutreffen ist, wobei die Schmelztemperatur der reaktiven Schicht mindestens 10°C (50 Grad Fahrenheit) höher ist als die Schmelztemperatur des CMAS, das während des Betriebs anzutreffen ist.

13. Verfahren nach einem der Ansprüche 1 bis 6, wobei die reaktive Schicht (18; 22) von einer Grenzfläche mit der Wärmebarrierebeschichtung (16; 20) zu einer Außenoberfläche der reaktiven Schicht hin abgestufte Eigenschaften hat.

14. Turbinenmaschinenkomponente (10) nach einem der Ansprüche 7 bis 12, wobei die reaktive Schicht (18; 22) von einer Grenzfläche mit der Wärmebarrierebeschichtung (16; 20) zu einer Außenoberfläche der reaktiven Schicht hin abgestufte Eigenschaften hat.

## Revendications

1. Procédé de formation d'un système de revêtement sur un composant de moteur à turbine (10), qui comprend les étapes consistant à :
mettre un oeuvre un substrat (12) ;
déposer un revêtement formant barrière thermique (16 ; 20) sur le substrat ;
déposer une couche réactive (18 ; 22) avec une cinétique réactionnelle CMAS connue sur le revêtement formant barrière thermique ; ladite phase de dépôt comprenant la formation d'un mélange de poudres contenant du SiO₂, du CaO, du MgO et de l'Al₂O₃ et au moins un élément réactif choisi dans le groupe constitué du Gd₂Zr₂O₇ et du TiO₂, et la pulvérisation dudit mélange de poudres et de l'élément réactif sur ledit revêtement formant barrière thermique (16 ; 20) ; et
activer la couche réactive avant que le composant ne soit placé en service, dans lequel ladite étape d'activation comprend la soumission de ladite couche réactive (18 ; 22) à un traitement thermique à une température dans la plage de 1149 °C à 1204 °C (2100 °F à 2200 °F).

2. Procédé selon la revendication 1, dans lequel ladite étape de mise en oeuvre d'un substrat comprend la mise en oeuvre d'un panneau de chambre de combustion.

3. Procédé selon la revendication 1 ou la revendication 2, dans lequel ladite étape de dépôt d'un revêtement formant barrière thermique comprend le dépôt d'un revêtement formant barrière thermique (16 ; 20) formé d'oxyde de zirconium stabilisé à l'oxyde d'yttrium.

4. Procédé selon la revendication 3, dans lequel le revêtement formant barrière thermique a au moins un élément promoteur de cristallisation choisi dans le groupe constitué du La₂Zr₂O₇, du Gd₂Zr₂O₇, de l'Al₂O₃, du TiO₂, du ZrO₂ et de leurs mélanges.

5. Procédé selon l'une quelconque des revendications précédentes, comprenant en outre le dépôt d'une couche de liaison (14) sur une surface dudit substrat (12) avant de déposer ledit revêtement formant barrière thermique (16 ; 20).

6. Procédé selon l'une quelconque des revendications précédentes, comprenant en outre la préparation d'un mélange de poudres ayant une composition chimique ayant une température de fusion, qui, après réaction thermochimique avec le revêtement formant barrière thermique (16 ; 20), est plus élevée que la température de fusion de la CMAS rencontrée en service et dans lequel ladite étape de préparation du mélange de poudres comprend la préparation d'une composition chimique, dans lequel ladite température de fusion est au moins 10 °C (50 ° Fahrenheit) supérieure à la température de fusion de la CMAS rencontrée en service.

7. Composant de moteur à turbine (10), comprenant :
un substrat (12) ;
un revêtement formant barrière thermique (16 ; 20) déposé sur le substrat ;
une couche réactive (18 ; 22) déposée sur le revêtement formant barrière thermique ;
ladite couche réactive (18 ; 22) étant formée d'un mélange de poudres contenant du SiO₂, du CaO, du MgO et de l'Al₂O₃ et au moins un élément réactif choisi dans le groupe constitué du Gd₂Zr₂O₇ et du TiO₂; et
ladite couche réactive ayant une cinétique réactionnelle CMAS connue et étant activée avant que ledit composant de moteur à turbine n'entre en service.

8. Composant de moteur à turbine (10) selon la revendication 7, dans lequel ledit composant est un panneau d'une chambre à combustion.

9. Composant de moteur à turbine (10) selon la revendication 7 ou 8, comprenant en outre une couche de liaison (14) entre ledit substrat (12) et ledit revêtement formant barrière thermique (16 ; 20).

10. Composant de moteur à turbine (10) selon la revendication 7, 8 ou 9, dans lequel ledit revêtement formant barrière thermique (16 ; 20) est formé d'oxyde de zirconium stabilisé à l'oxyde d'yttrium.

11. Composant de moteur à turbine selon la revendication 10, dans lequel le revêtement formant barrière thermique (16 ; 20) a au moins un élément promoteur de cristallisation choisi dans le groupe constitué du La₂Zr₂O₇, du Gd₂Zr₂O₇, de l'Al₂O₃, du TiO₂, du ZrO₂ et de leurs mélanges.

12. Composant de moteur à turbine (10) selon l'une quelconque des revendications 7 à 11, dans lequel ladite couche réactive (18 ; 22) a une température de fusion, qui est plus élevée que la température de fusion de la CMAS rencontrée en service et dans lequel ladite température de fusion de la couche réactive est au moins 10 °C (50 ° Fahrenheit) supérieure à la température de fusion de la CMAS rencontrée en service.

13. Procédé selon l'une quelconque des revendications 1 à 6, dans lequel ladite couche réactive (18 ; 22) a des caractéristiques graduées depuis une interface avec ledit revêtement formant barrière thermique (16 ; 20) jusqu'à une surface externe de ladite couche réactive.

14. Composant de moteur à turbine (10) selon l'une quelconque des revendications 7 à 12, dans lequel ladite couche réactive (18 ; 22) a des caractéristiques graduées depuis une interface avec ledit revêtement formant barrière thermique (16 ; 20) jusqu'à une surface externe de ladite couche réactive.
